# DEMANDE DE BREVET EUROPEEN

(11) **EP 1 193 020 A1**
(43) Date de publication de la demande: **03.04.2002**
(21) Numéro de dépôt: 00870217.7
(22) Date de dépôt: 26.09.2000
(51) Int. Cl.: B23K 11/04, B23K 11/25

(54) **Procédé de diagnostic dynamique et d'aide à la décision en temps réel pour une soudeuse électrique en bout par étincelage direct et ses soudures**

(71) Demandeur: RECHERCHE ET DEVELOPPEMENT DU GROUPE COCKERILL SAMBRE, 4000 Liège (BE)
(72) Inventeur: Butenko, Eugène, 4460 Grace-Hollogne (BE); De Pra, Jean-Marie, 4101 Jemeppe-sur-Meuse (BE); Roggen, Gilbert, 4053 Embourg (BE)
(74) Mandataire: Van Malderen, Michel

(57) **Abrégé**

Un procédé d'acquisition de données, sous forme de mesures et calculs, de diagnostic et d'aide à la décision pour une soudeuse électrique en bout par étincelage direct et pour les soudures obtenues comprend respectivement les étapes de mesure de la tension alternative instantanée aux bornes du primaire (19,33) et du secondaire (16,35,36) du transformateur de la soudeuse, et entre les mors (18,39) des mâchoires de la soudeuse ; mesure du courant instantané dans le primaire (24,34) et le secondaire (17,37,38) du transformateur ; mesure du déplacement instantané (41,42) de la mâchoire mobile (4) ; mémorisation desdites tensions, desdits courants et dudit déplacement pendant le processus de soudage ; calculs de l'énergie fournie par le primaire et le secondaire, de préférence vers les mors (5,6), en fonction du temps ; calcul de l'énergie fournie par le secondaire vers les mors et de l'énergie calorifique dissipée lors de l'étincelage, en fonction du déplacement de la mâchoire mobile ; calcul de rendements énergétiques et sur base de ces mesures et calculs, établissement automatique d'un diagnostic dynamique et en "temps réel" (68,74,78,79,80), avec ou sans intervention interactive d'un opérateur, quant à la qualité d'au moins une soudure venant d'être réalisée sur ladite soudeuse.

## Description

### Objet de l'invention

La présente invention se rapporte à un nouveau procédé de diagnostic dynamique et en "temps réel" pour une soudeuse électrique en bout par étincelage direct et pour les soudures obtenues avec un tel équipement.

La présente invention se rapporte également à la soudeuse électrique en bout par étincelage direct sur laquelle le procédé est mis en oeuvre.

### Etat de la technique

Le soudage en bout est connu et se distingue des autres procédés classiques de soudage par points et au galet, non seulement par son mode opératoire, mais surtout par le fait que la soudure s'étend à la section entière des deux pièces assemblées, réalisant ainsi une pièce unique parfaitement continue quant à ses dimensions géométriques, sensiblement homogène au point de vue métallurgique et de résistance mécanique pratiquement uniforme.

Ce procédé permet de réaliser le raboutage rectiligne de ronds, carrés, profilés divers, tubes, feuillards, etc. ou l'assemblage de pièces formant entre elles un certain angle (le plus souvent 90°).

La qualité des soudures réalisées par la technique du soudage en bout est primordiale dans un certain nombre de cas. En effet, dans les processus en continu notamment, comme par exemple le laminage, les soudures doivent résister aux sollicitations auxquelles elles sont soumises. Dans le cas contraire, des pertes de productivité importantes peuvent être observées ainsi qu'une dégradation des outils due aux ruptures successives des soudures. L'importance de la qualité des soudures ne se limite évidemment pas aux processus continus : la qualité des soudures est primordiale dans les mises en oeuvre du produit chez le client.

Lors de la production de bande d'acier, il est nécessaire dans la filière de production de souder bout à bout les bandes qui sont ainsi déroulées en continu afin d'assurer un traitement ininterrompu du produit. On peut citer ici comme exemple le procédé de décapage en continu ou le procédé de laminage en continu. Dans ces procédés, il est très important d'assurer cette continuité de traitement afin de conserver une qualité de produit élevée, d'obtenir une productivité importante et de réduire les coûts de production. Un accumulateur positionné après la soudeuse et préalablement chargé du produit à traiter permet d'éviter un arrêt dans le procédé de traitement pendant l'opération de soudage.

Lors de la rupture d'une soudure dans ces procédés, on peut relever les inconvénients suivants :
- perte de production due à l'arrêt occasionné par la rupture ;
- dégât occasionné à l'outil par cette rupture ;
- perte de qualité du produit ;
- risque de blessure pour le personnel lors des opérations d'enfilage de la bande ;
- perte de fiabilité de la soudure.

Après la réalisation d'une soudure, en cas de doute sur la qualité de celle-ci, l'opérateur de soudeuse ne peut que la solliciter mécaniquement afin de tester sa résistance. Ce test n'est bien entendu pas suffisant et pas très fiable. De plus, il prend un certain temps réduisant d'autant la productivité de la ligne de fabrication.

Aujourd'hui, les moyens existants afin de déterminer la qualité des soudures sont donc très rudimentaires et ne permettent pas une analyse fine, précise ou exacte et en "temps réel" sur la soudeuse. Les moyens d'investigation connus se limitent à un archivage de certains signaux et à la visualisation du tracé de l'évolution au cours du temps de quelques grandeurs mesurées.

Ainsi dans le cadre des soudeuses électriques en bout par étincelage direct, les grandeurs électriques de type courant ou tension habituellement mesurées et valorisées sont celles du primaire. On mesure parfois également la (ou les) tension(s) secondaire(s) du (ou des) transformateur(s) alimentant le circuit électrique, constitué des câbles d'alimentation éventuels, des empilages, des mâchoires, des mors, du produit et ses faces à souder proprement dites. En aucun cas, les mesures des courants secondaires instantanés ne sont valorisées, par exemple dans le cadre d'un diagnostic automatique et systématique portant sur la validité d'une soudure en bout par étincelage direct avant de l'envoyer dans le processus continu qui suit la soudeuse.

En pratiquant de la sorte, aucune analyse détaillée ne peut se faire puisqu'une distinction entre les différentes parties mentionnées ci-dessus n'est possible sans la valorisation des mesures instantanées des différents courants et tensions secondaires. Ainsi, par exemple, le bilan du transfert d'énergie électrique du primaire vers le secondaire du transformateur et vers le voisinage des faces à souder proprement dites ne peut être quantifié réellement sans la valorisation de mesures instantanées de courant et de tension acquises en différents points du circuit primaire et secondaire. Sans valorisation des mesures instantanées du courant et de la tension secondaire, le bilan du transfert d'énergie mesuré au primaire du transformateur ne peut être utilisé pour extrapoler la répartition d'énergie au secondaire et/ou au voisinage des faces à souder proprement dites. Si tel devait être le cas, cela se ferait à partir d'hypothèses erronées. La dépendance vis-à-vis des caractéristiques du transformateur, de son comportement complexe en régime transitoire, de l'état électromécanique des bobinages, des mâchoires, des empilages, des mors et du produit rendent ce calcul des plus hasardeux. En effet sans mesures instantanées de courants et tensions secondaires et la valorisation de celles-ci, on ne peut quantifier avec une précision suffisante la répartition des différentes pertes électriques depuis l'origine (primaire du transformateur) jusqu'au voisinage des faces à souder proprement dites. De plus, la connaissance de l'établissement de l'énergie, au voisinage des mors, en fonction de l'espace parcouru et du temps ne serait qu'approximative et ne pourrait être utilisée pour diagnostiquer d'éventuels défauts de type énergétique. Cette façon de procéder rendrait imprécis tout diagnostic relatif à la soudeuse et de la soudure obtenue.

L'état de la technique ne mentionne aucune analyse ou valorisation des signaux acquis, qui permettraient à un opérateur :
- d'agir immédiatement sur la soudure qui a été réalisée avant de l'envoyer dans le processus continu à la suite de la soudeuse ;
- de tester immédiatement après soudage un nouveau diagnostic fait à partir de données plus pertinentes et de bénéficier immédiatement du résultat sans recommencer la soudure ;
- de modifier les paramètres régissant le processus de soudage afin de mieux les adapter ensuite au type de produit soudé ;
- de connaître l'état électromécanique de la soudeuse.

Enfin, les systèmes disponibles sont en quelque sorte "juge et partie" puisque les mesures effectuées sont utilisées d'une part pour la régulation de la soudeuse et d'autre part pour le tracé des évolutions pouvant servir à une analyse a posteriori. Le fait de se servir des mêmes signaux électriques entraîne évidemment un manque de contrôle puisque le but d'une régulation est de permettre à une (ou plusieurs) grandeur(s) de suivre l'évolution désirée.

### Buts de l'invention

La présente invention a pour but de remédier aux inconvénients précités de l'état de la technique.

En particulier, l'invention a pour but de proposer un nouveau procédé de diagnostic dynamique et en "temps réel" pour une soudeuse électrique en bout par étincelage direct et pour les soudures obtenues avec cet équipement dans les différents cas d'application de la technique de soudage en bout par étincelage direct, que ce soit en processus continu ou discontinu, en courant alternatif, pulsé, quasi continu ou continu, c'est-à-dire avec redressement des tensions secondaires par ponts de diodes, avant alimentation électrique des mors, pour une section de produit ronde, carrée, rectangulaire, de type bande plate, etc.

Le procédé de la présente invention a pour but complémentaire de remédier aux problèmes précités sans perturber les opérations de soudage en bout classiques dans le cadre desquelles il peut être utilisé.

### Principaux éléments caractéristiques de l'invention

La présente invention se rapporte à un procédé d'acquisition de données, sous forme de mesures et de calculs, de diagnostic dynamique et d'aide à la décision en "temps réel" pour une soudeuse électrique en bout par étincelage direct et pour les soudures obtenues au moyen de ladite soudeuse ; ladite soudeuse étant incorporée dans un processus de production d'acier, de préférence continu, et comprenant au moins un transformateur comportant au moins un circuit primaire et au moins un circuit secondaire, ainsi qu'un dispositif de serrage à mâchoires, dont une mâchoire fixe et une mâchoire mobile, permettant de maintenir au moins deux pièces à souder et insérées en série dans le circuit secondaire du transformateur, ledit circuit secondaire comportant en outre au moins un bobinage secondaire dudit transformateur, des connexions d'entrée et sortie du bobinage secondaire, des empilages, lesdites mâchoires et des mors, les circuits primaire et secondaire étant munis de capteurs de courant et de tension ; comprenant les étapes suivantes :
- mesure de la tension alternative instantanée, de préférence sinusoïdale, aux bornes du primaire du transformateur de la soudeuse ;
- mesure de la tension alternative instantanée aux bornes du secondaire du transformateur, et entre les mors des mâchoires de la soudeuse ;
- mesure du courant instantané dans le primaire et le secondaire du transformateur ;
- mesure du déplacement instantané de la mâchoire mobile en au moins deux points ;
- mémorisation desdites tensions, desdits courants et dudit déplacement pendant le processus de soudage ;
- calcul de l'énergie fournie par le primaire en fonction du temps ;
- calcul de l'énergie fournie par le secondaire, de préférence vers les mors, en fonction du temps ;
- calcul de l'énergie fournie par le secondaire vers les mors en fonction du déplacement de la mâchoire mobile ;
- calcul de l'énergie calorifique dissipée lors de l'étincelage, appelée énergie matière, en fonction du déplacement de la mâchoire mobile ;
- calcul du rendement énergétique secondaire/primaire ; mors/secondaire ; mors/primaire et mors/matière, pendant au moins une durée donnée ;
- sur base desdites mesures et desdits calculs, établissement automatique d'un diagnostic dynamique et en "temps réel", avec ou sans intervention interactive d'un opérateur, quant à la qualité d'au moins une soudure venant d'être réalisée sur ladite soudeuse.

De préférence, le procédé comporte en outre les étapes suivantes :
- calcul de l'énergie fournie par le primaire, pendant au moins une durée donnée ;
- calcul de l'énergie fournie par le secondaire, pendant au moins une durée donnée ;
- calcul de l'énergie fournie par le secondaire vers les mors, pendant au moins une durée donnée.

Le soudage par étincelage direct s'applique à un processus de production d'acier continu ou discontinu. Il peut être réalisé en courant alternatif, pulsé, quasi continu ou continu. Enfin, il s'applique de préférence à des produits à section ronde, carrée, rectangulaire, à des bandes plates ou à des produits tubulaires. Plus particulièrement, le domaine technique couvert par l'invention concerne le soudage en bout par étincelage direct de bande d'acier dans un processus continu, de préférence le décapage ou le laminage continu.

Selon une forme d'exécution préférée de l'invention, le procédé est mis en oeuvre sur une soudeuse comportant une mâchoire mobile actionnée en direction d'une mâchoire fixe au moyen de vérins hydrauliques, actionnés à leur tour par un circuit hydraulique de commande, un capteur de pression différentielle étant installé sur les vérins, un capteur de pression étant installé à la sortie d'accumulateurs hydrauliques, deux capteurs linéaires étant installés dans l'intervalle entre les mors, de préférence inférieurs et comporte en outre les étapes suivantes :
- mesure instantanée du déplacement de la mâchoire mobile en au moins deux points et calcul du déplacement différentiel ;
- mesure instantanée de la pression à la sortie des accumulateurs hydrauliques ;
- mesure instantanée de la pression différentielle appliquée aux vérins de déplacement ;
- mémorisation dudit déplacement et desdites pressions pendant le processus de soudage ;
- en fonction dudit déplacement, calcul de l'écart de la mâchoire mobile en au moins deux points, dit obliquité, par rapport à l'axe théorique de soudage ;
- calcul des efforts mécaniques de soudage pendant les phases d'étincelage et de forgeage.

Avantageusement, dans le procédé d'acquisition de données sous forme de mesures et/ou calculs, selon l'invention, lesdites données sont présentées sur un écran d'ordinateur, un moniteur de contrôle ou une station de traitement, de préférence en couleur et valorisées sous forme d'un diagnostic qualitatif.

De manière particulièrement avantageuse, l'affichage desdites données et leur valorisation sous forme de diagnostic permet à un opérateur de les visualiser et/ou analyser en "temps réel" et constitue pour ledit opérateur une aide à la décision en vue de valider ou rejeter la soudure qui vient d'être réalisée.

De plus, immédiatement après l'opération de soudage, l'opérateur a la possibilité d'établir un nouveau diagnostic, sur base de données plus pertinentes, de préférence introduites par ledit opérateur et de préférence liées à la géométrie et la soudabilité du produit à souder, dont le résultat est obtenu immédiatement, sans recommencer la soudure.

Avantageusement, une courbe de l'énergie dissipée en fonction du déplacement est de préférence obtenue à un endroit se trouvant aussi près que possible de la soudure, ladite courbe permettant une analyse numérique immédiate conduisant à des diagnostics de type énergétique particulièrement pertinents.

Avantageusement, l'opérateur peut évaluer la qualité du forgeage ainsi que le nombre de défauts de soudage, de préférence des collages et micro-collages.

Toujours selon l'invention, la soudure peut être rejetée qualitativement et recommencée par l'opérateur, sans que les pièces à souder aient quitté la station de soudage pour poursuivre le procédé de production.

De préférence, l'affichage des données permet à un opérateur de les analyser en "temps réel" et d'émettre un diagnostic sur l'état électromécanique de la soudeuse.

Alternativement, une décision de validation ou rejet de la soudure qui vient d'être réalisée peut être prise automatiquement en "temps réel", sans intervention d'un opérateur.

Plus particulièrement, l'invention concerne un procédé de détection, de quantification et de qualification de défauts de collage avant forgeage, comprenant les étapes suivantes :
- recherche de maxima locaux dans la courbe constituée par les mesures de courant secondaire instantané prises pendant des durées successives correspondant à la période cyclique de la tension alimentant le primaire du transformateur ;
- comptage, pendant l'étincelage, du nombre de fois que lesdits maxima de courant dépassent un pourcentage fixe du courant maximum de forgeage ;
- à partir de la valeur obtenue, qualification dudit défaut.

Cette manière remarquable selon l'invention de quantifier ce type de défaut ne dépend, ni de la géométrie du produit, ni des caractéristiques de la tension sinusoïdale alimentant le primaire. Elle constitue donc un avantage majeur de la présente invention, tout en lui conférant un caractère universel.

Conformément à l'invention, un fichier desdites données est élaboré et archivé pour chaque soudure réalisée, les interventions de maintenance réalisées sur la soudeuse sont mémorisées.

De préférence, des statistiques de qualité sont établies sur un grand nombre de soudures réalisées, lesdites statistiques étant affichées et répertoriant la nature et le nombre des défauts de soudage.

Selon une caractéristique particulière de l'invention, une acquisition de signaux est réalisée à une cadence telle que, lorsqu'une tension alternative sinusoïdale de fréquence 50 ou 60 hertz alimente le primaire du transformateur, l'intervalle de temps d'acquisition caractéristique est compris entre 0,01 et 2 ms, et de préférence entre 0,1 et 1 ms. On peut en conséquence procéder à une analyse détaillée et fine des phénomènes accompagnant le processus de soudage en bout.

Un autre aspect de la présente invention concerne un dispositif d'affichage de données électroniques, de préférence un écran d'ordinateur, un moniteur de contrôle ou une station de développement, lesdites données étant obtenues au moyen du procédé selon l'invention, ou via introduction par un opérateur, de préférence à un clavier, caractérisé en ce que le dispositif comporte au moins une zone d'affichage d'un graphique (X,Y), une zone où figurent les données de base des produits à souder pour une nouvelle séquence de soudage, après introduction automatique ou par ledit opérateur, et une zone de diagnostic, comportant des valeurs de paramètres de soudage prédéterminés, les mêmes paramètres sélectionnés par l'opérateur et les mêmes paramètres effectivement mesurés. Les données de base des produits à souder sont, pour la tête et la queue de bande, la soudabilité, l'épaisseur, la largeur et la section des tôles à souder.

De préférence, les paramètres de soudage prédéterminés sont sélectionnés dans le groupe comprenant le pourcentage haute tension, le temps de soudage, la course de forgeage, le plot utilisé du transformateur, la came ou convexité de la courbe de déplacement, l'espace final, la barre d'espacement et le nombre de cycles de courant de forgeage.

Selon une réalisation particulière du dispositif de l'invention, celui-ci comporte une zone d'affichage indiquant le statut qualitatif de la soudure. Au cas où la qualité de la soudure est insuffisante, le dispositif est pourvu d'une zone d'affichage en indiquant la cause.

Avantageusement, les graphiques (X, Y) comportent des valeurs instantanées, absolues ou différentielles, mesurées ou calculées, choisies dans le groupe constitués par des tensions, des courants, des énergies dissipées, des rendements énergétiques relatifs au soudage et des déplacements de mâchoires, les valeurs mesurées étant acquises en différents points de la soudeuse. Des statistiques portant sur un grand nombre de soudures déjà réalisées sont affichées dans des diagrammes, par exemple du type à secteurs ("camembert"), histogramme ou Pareto.

La présente invention a également pour objet de proposer une soudeuse électrique en bout par étincelage direct, sur laquelle est mis en oeuvre le procédé décrit ci-dessus.

De préférence, la soudeuse électrique en bout par étincelage direct, comprend un dispositif d'affichage de données électroniques selon l'invention.

### Brève description des dessins

La figure 1 représente une vue schématique en coupe verticale de la soudeuse en bout à étincelage direct selon l'invention, avec indication du schéma électrique, y compris les capteurs électriques.

La figure 2 représente une vue schématique du dessus de la soudeuse selon l'invention, avec indication d'un schéma hydraulique, y compris les capteurs de pression et de position. La figure 2 montre en particulier l'obliquité de la mâchoire mobile à un endroit donné de son déplacement.

La figure 3 représente le schéma électrique selon une forme d'exécution particulière de l'invention, y compris les capteurs de courant, délivrant un signal en rapport avec la valeur instantanée du courant mesuré.

La figure 4.a représente un exemple de variation de la tension et du courant secondaire en fonction du temps, correspondant à une fréquence d'acquisition de mesure de 2000 hertz, pour une tension alternative sinusoïdale de fréquence 50 hertz alimentant le primaire du (des) transformateur(s) de soudage.

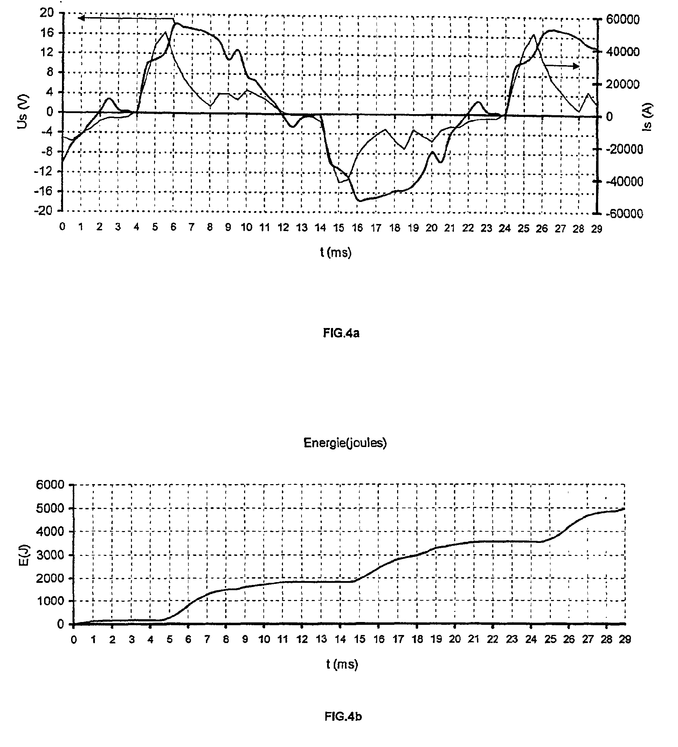

La figure 4.b représente un exemple de calcul de variation de l'énergie fournie par le secondaire en fonction du temps, correspondant à une fréquence d'acquisition des mesures de tension et courant secondaires de 2000 hertz, pour une tension alternative sinusoïdale de fréquence 50 hertz alimentant le primaire du (des) transformateur(s) de soudage.

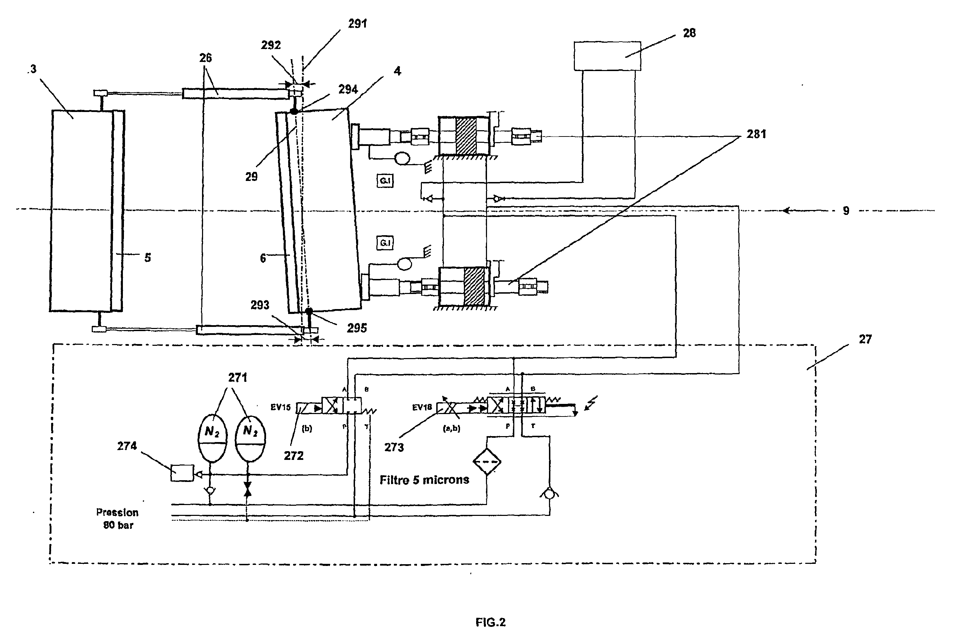

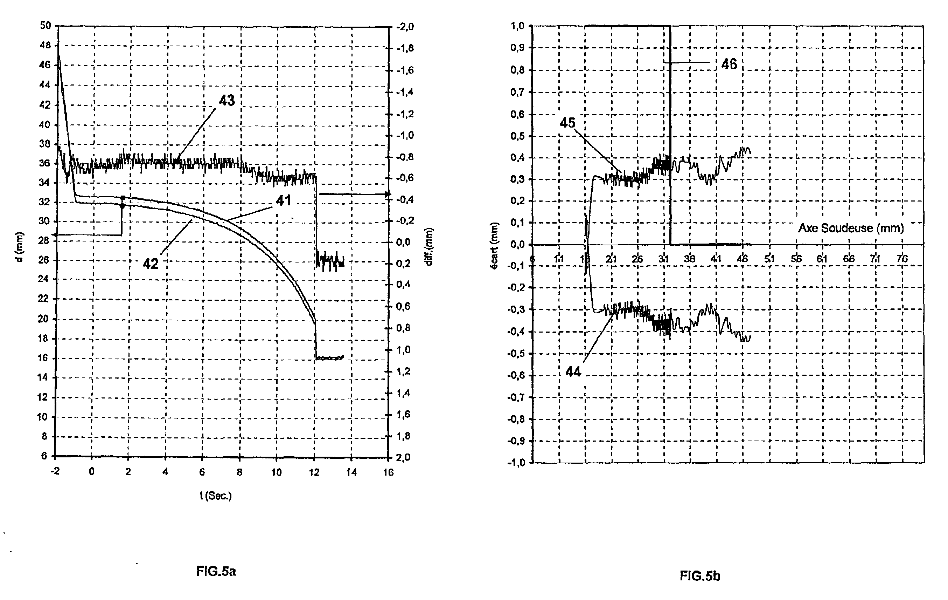

La figure 5.a représente un exemple d'écran diagnostique affichable après réalisation d'une soudure, représentant le déplacement au cours du temps de la mâchoire mobile de la figure 2 en deux endroits différents ainsi que le déplacement différentiel.

La figure 5.b représente un exemple d'écran diagnostique "mécanique" affichable après réalisation d'une soudure, montrant l'obliquité de la mâchoire mobile en fonction de son déplacement au cours du processus de soudage.

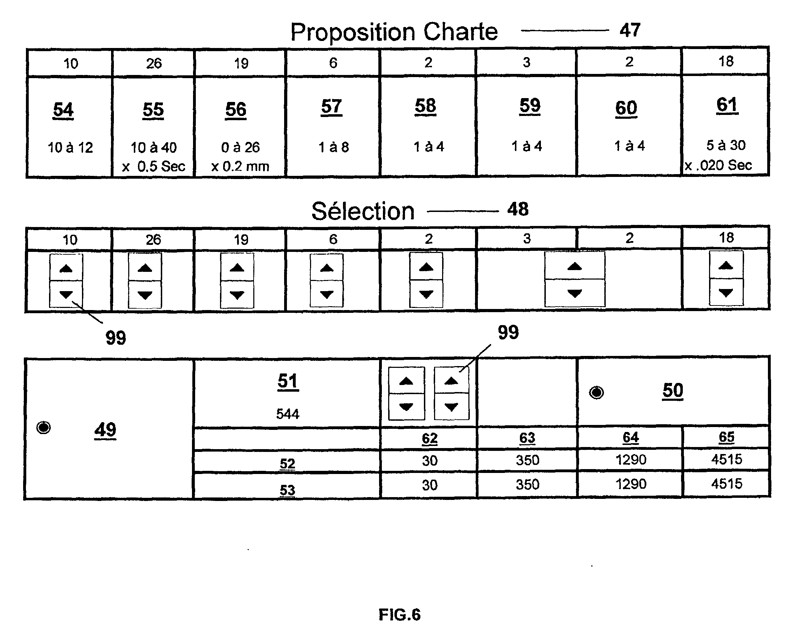

La figure 6 représente un exemple d'écran diagnostique affichable avant et après réalisation d'une soudure, et permet de tester le diagnostic sur changement de données de base sans recommencer la soudure.

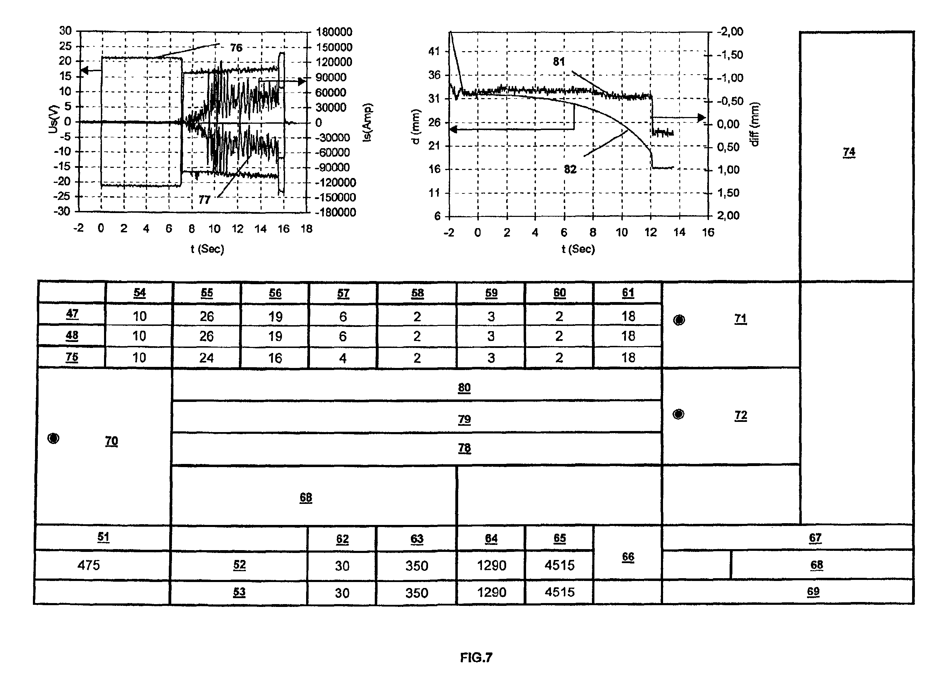

La figure 7 représente un exemple d'écran diagnostique affiché après réalisation d'une soudure, dans le cas d'une soudure à vérifier.

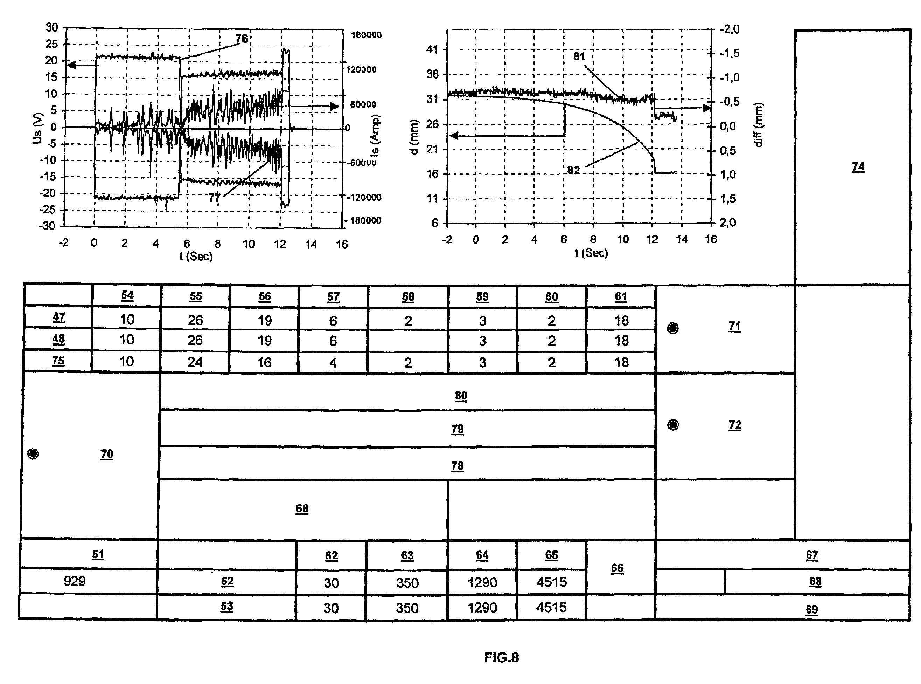

La figure 8 représente un exemple d'écran diagnostique identique à celui de la figure 7 affiché après réalisation d'une soudure, mais pour une soudure qualitativement bonne.

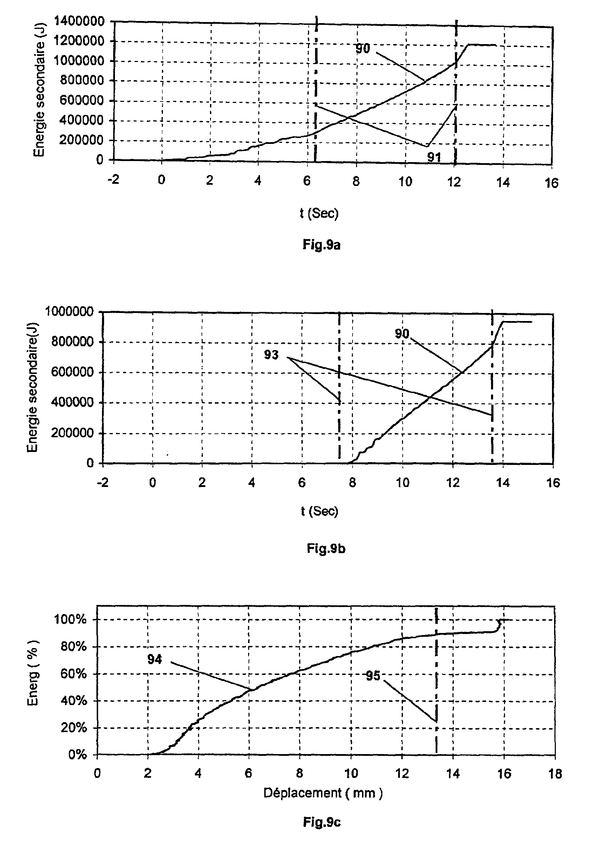

La figure 9.a représente un exemple de calcul de variation de l'énergie fournie par le secondaire en fonction du temps pendant l'élaboration complète d'une soudure dans un cas sans défauts.

La figure 9.b représente un exemple de calcul de variation de l'énergie fournie par le secondaire en fonction du temps pendant l'élaboration complète d'une soudure. Dans le cas représenté, un défaut correspondant à une faible variation de l'énergie dans la première moitié du temps total est diagnostiqué.

La figure 9.c représente un exemple de calcul de variation de l'énergie fournie par le secondaire en fonction de l'espace parcouru, pendant l'élaboration complète d'une soudure. Ceci permet au système de diagnostiquer des défauts indépendamment du type de régulation du déplacement de la table mobile lors de l'élaboration complète d'une soudure.

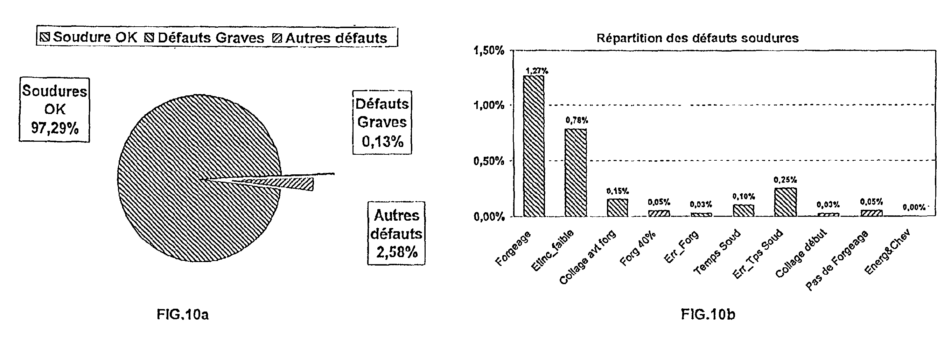

Les figures 10.a et 10.b sont obtenues sur une station de développement à partir des fichiers récapitulatifs générés après chaque soudure et dont le contenu est repris dans le tableau 3. Les statistiques sont affichées sous la forme de diagramme à secteurs ou "camembert" (fig. 10.a) et d'histogramme (fig. 10.b).

Dans un souci de faciliter la compréhension des problèmes auxquels la présente invention apporte des solutions originales, on se placera, à titre d'exemple, dans le cas du soudage en bout par étincelage direct de bande d'acier dans un processus continu tel que le décapage ou le laminage continu. Mais il va de soi que les solutions originales décrites et mises en oeuvre dans le cadre de l'invention sont aussi applicables aux différents domaines industriels précités.

### Description d'une forme d'exécution préférée de l'invention

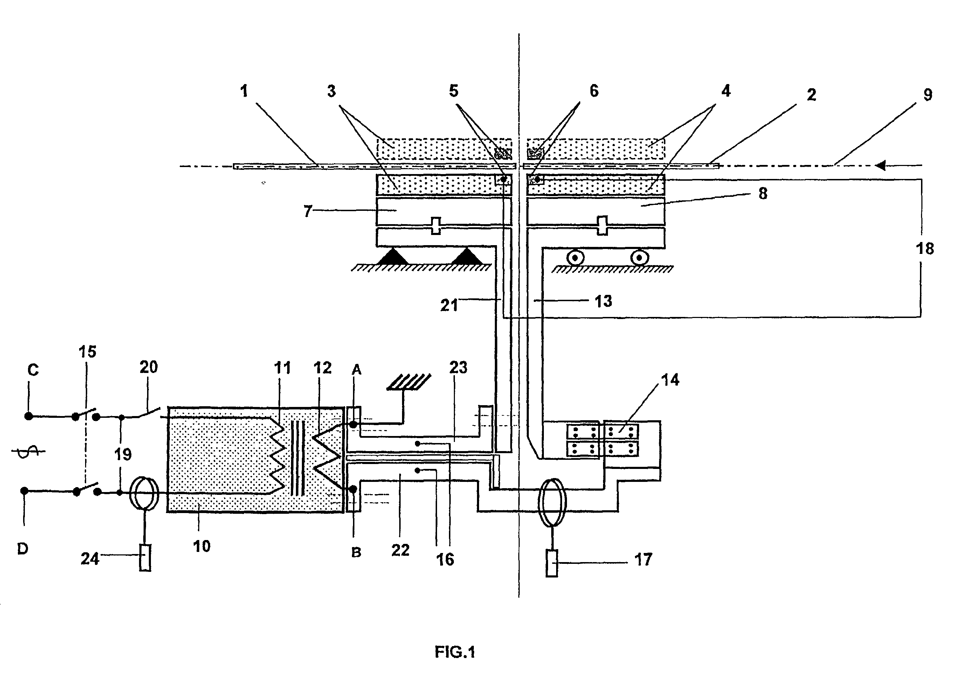

Dans le procédé de soudage en bout par étincelage, les deux pièces à souder 1,2 sont serrées chacune dans un dispositif de serrage à mâchoires 3,4 (Fig. 1). Ces mâchoires, connectées directement ou indirectement aux bornes du secondaire 12 du transformateur de soudage 10, assurent le passage du courant de soudage dans les mors 5,6 et les deux pièces à souder 1,2.

Le circuit primaire est constitué d'un bobinage primaire 11 alimenté en courant alternatif sinusoïdal (50 ou 60 Hz) par le réseau via les bornes C,D. Il est pourvu d'au moins un interrupteur 20 et d'un disjoncteur 15.

Le circuit électrique secondaire est constitué du bobinage secondaire 12, des éventuels câbles d'alimentation partant de celui-ci, des points de connexion A et B, des empilages 22,14,13,8,7,21,23, des mâchoires inférieures 3,4, des mors inférieurs 5,6, du produit 1,2 2 et de ses faces à souder proprement dites. Le chemin du courant secondaire est : point de connexion B, 22, le shunt 14, 13, 8, 4 inférieur, 6 inférieur, 2, 1, 5 inférieur, 3 inférieur, 7 , 21, 23, point de connexion A. Des mesures de tension 19,16,18 sont effectuées respectivement aux bornes du primaire et secondaire du transformateur ainsi qu'entre les mors 5,6 des mâchoires inférieures. Des capteurs de courant 24,17 installés respectivement dans les circuits primaire et secondaire mesurent les courants correspondants.

Afin de clarifier les idées, on supposera par la suite que l'installation comporte un seul transformateur avec un primaire et un secondaire. L'installation réelle comporte le cas échéant plusieurs transformateurs, chacun de ceux-ci comportant un ou plusieurs primaires et/ou secondaires.

Le serrage des pièces 1,2 entre mors 5,6 doit être suffisant pour assurer une bonne conduction du courant de soudage entre les pièces et ces mors, grâce à une résistance de contact faible, et empêcher tout glissement des pièces entre mors lorsqu'un effort de refoulement leur est appliqué.

Le dispositif de serrage gauche 3 est fixé sur une table fixe 7 solidaire du bâti de la machine tandis que le dispositif de serrage droit 4 est fixé sur une table mobile 8 qui se déplace parallèlement à l'axe 9 de déplacement des pièces à souder.

La figure 2 donne une description d'un schéma mécanique et hydraulique d'une soudeuse, dans une forme d'exécution particulière, non limitative en ce qui concerne la portée de l'invention. La mâchoire mobile 4 est actionnée vers la mâchoire fixe 3 au moyen de vérins hydrauliques 281. Le circuit hydraulique de commande 27 de ces vérins comprend une servo-vanne 273, une électrovanne de forgeage 272, des accumulateurs hydrauliques 271 ainsi qu'un capteur de pression 274, délivrant un signal électrique en rapport avec la pression de service. Un capteur supplémentaire de pression différentielle 28 est installé sur les vérins 281. Deux capteurs linéaires 26 fournissent un signal électrique en rapport avec la distance entre leurs points d'attache aux mâchoires. Ces capteurs permettent de mesurer la distance entre les mâchoires ainsi que le déhanchement de la mâchoire mobile.

Lors du soudage par étincelage, les opérations suivantes sont réalisées successivement :
- serrage des pièces à souder 1,2 (Fig. 1) entre les mors 5,6 des mâchoires 3,4. A ce moment, les extrémités à assembler ne sont pas en contact ou sont en contact imparfait sans pression ;
- mise sous tension du transformateur et, de ce fait, des pièces à souder ;
- mise en mouvement lent de la table mobile 8 et phénomène d'étincelage lorsque les faces à souder se touchent sous faible pression ;
- refoulement ou forgeage après un certain déplacement.

La table mobile 8 étant en mouvement, les faces à souder des pièces entrent en contact sous faible pression. Le circuit électrique secondaire est alors fermé par ces quelques points de contact où la densité de courant est très élevée. Il s'ensuit un dégagement calorifique intense en ces points qui entrent en fusion rapidement. Ce phénomène est caractérisé par la projection de particules ou "étincelles", d'où le nom d'étincelage. Il se poursuit pendant toute la durée de l'avance de la table mobile qui maintient en permanence le contact entre les pièces au fur et à mesure des expulsions de matière.

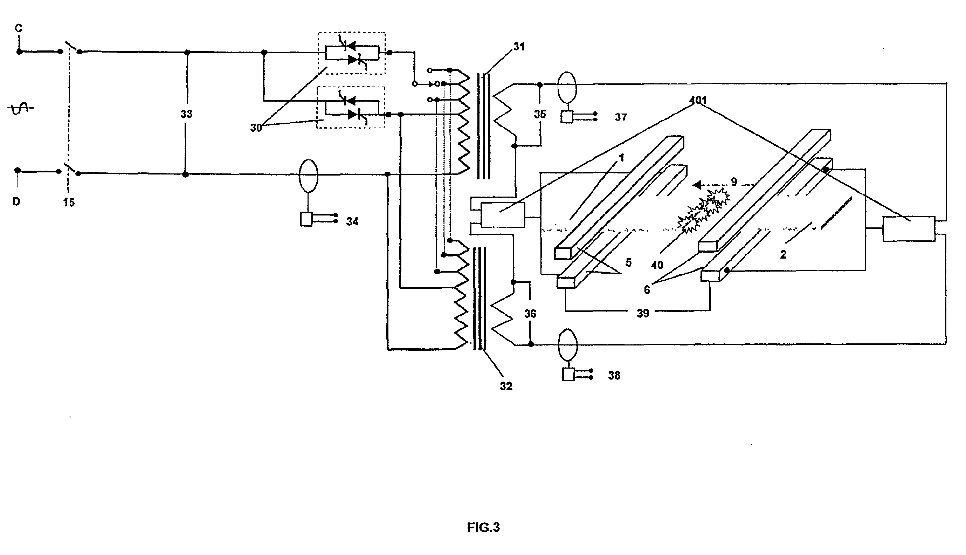

Quand la course d'étincelage est terminée, les extrémités à assembler ont atteint la température de soudage et sont appliquées fortement l'une contre l'autre grâce à un mouvement rapide de la table mobile. C'est la phase de refoulement ou forgeage. Pendant cette phase, le courant de soudage est maintenu, coupé totalement ou partiellement ou parfois prolongé au-delà de la fin de forgeage mécanique. Les mâchoires de serrage sont libérées et la pièce soudée peut être déplacée. L'(ou les) interrupteur(s) 20 (Fig.1) présent(s) dans le circuit primaire du (ou des) transformateur(s) peut (peuvent) être remplacé(s) par des interrupteurs électroniques à thyristors 30 (Fig.3), à angle d'amorçage réglable.

La position des différents capteurs de courant et de tension est indiquée à la figure 3, à titre d'exemple, pour une forme d'exécution particulière alternative comportant deux transformateurs 31,32 reliés aux mâchoires et aux mors par les empilements 401. Dans le circuit primaire, on procède à au moins une mesure de tension totale 33 (Uₚ) et une mesure de courant total 34 (Iₚ). Dans le circuit secondaire, on procède à une mesure de tension 35,36 (Uₛ₁, Uₛ₂) à chaque enroulement secondaire ainsi qu'entre les mors 39 (Uₘ). Les courants 37,38 (Iₛ₁, Iₛ₂) correspondant à chaque enroulement secondaire sont également mesurés.

Le diagnostic dynamique d'aide à la décision en "temps réel" pour soudeuse électrique en bout par étincelage direct et pour ses soudures 40, objet de la présente invention, est notamment caractérisé par le fait qu'on analyse et qu'on valorise des grandeurs électriques pertinentes 33,34,35,36,37,38,39 (Fig.3), non seulement au primaire du transformateur de la soudeuse mais également au secondaire de celui-ci et au voisinage des mors 5 et 6 (Fig.3) qui enserrent le produit à souder. De plus ces grandeurs électriques de type tension et courant sont acquises à une fréquence d'acquisition de mesure au moins vingt fois supérieures à la fréquence de la tension alternative sinusoïdale alimentant le primaire du (ou des) transformateurs(s) de soudage.

La figure 4.a donne un exemple de mesure de courant et tension secondaires en fonction du temps lorsque la fréquence d'acquisition de mesure est de 2000 hertz et pour une tension alternative sinusoïdale de fréquence 50 hertz alimentant le primaire du (ou des) transformateur(s) de soudage. Pour la compréhension, on symbolise la durée correspondant à la fréquence fixe d'acquisition des mesures par Δt(s), ou encore Δt.

A partir de ces valeurs, on calcule l'énergie E(J) fournie pendant une durée déterminée (Fig. 4.b). La durée déterminée est évidemment un multiple entier de Δt et à chaque intervalle de temps Δt correspond une acquisition instantanée en tension et courant. Dans ces conditions, E(J) représente le résultat du calcul de la somme des produits courant et tension instantanés par Δt.

Dans le cas de la figure 3, pour une durée déterminée, on a :
- Ep = somme des Uₚ x Iₚ x Δt (= énergie fournie par le primaire pendant une durée déterminée) ;
- Eₛ₁ = somme des Uₛ₁ x Iₛ₁ x Δt (= énergie fournie par le secondaire 1 pendant une durée déterminée) ;
- Eₛ₂ = somme des Uₛ₂ x Iₛ₂ x Δt (= énergie fournie par le secondaire 2 pendant une durée déterminée) ;
- Eₛ = Eₛ₁ + Eₛ₂ (= énergie totale fournie par les secondaires pendant une durée déterminée) ;
- Eₘ = somme des Uₘ x (Iₛ₁ + Iₛ₂) x Δt (= énergie pendant une durée déterminée fournie vers les mors 5,6 = énergie de soudage pendant une durée déterminée ).

A la figure 9, on a représenté la variation de l'énergie calculée 90,94 fournie par le secondaire respectivement en fonction du temps (Fig. 9.a et 9.b) et du déplacement (Fig. 9.c). Les repères 91 et 93 délimitent une durée d'étincelage, qui précède le forgeage (Fig. 9.a et 9.b). Le repère 95 sépare la phase d'étincelage du début du forgeage à la figure 9.c.

A partir des calculs énergétiques, on peut par exemple diagnostiquer un déséquilibre dans la répartition d'énergie en fonction du temps pendant l'étincelage 90, ce qui présume une mauvaise présentation géométrique des produits à souder (Fig. 9.b). On peut aussi diagnostiquer un manque d'énergie en fonction du déplacement (Fig. 9.c) de la table par rapport à la géométrie des produits et aux longueurs brûlées, mesurée pendant l'étincelage, présumant ainsi par exemple d'un chevauchement des produits à souder. Le chevauchement se caractérise par une superposition partielle ou totale des produits à souder avant forgeage et par une absorption moindre et différente d'énergie par rapport à un étincelage correct avant forgeage. La connaissance de l'énergie en fonction du déplacement 94 (Fig. 9.c) le plus près possible de la soudure permet des diagnostics pertinents basés sur des analyses numériques caractérisant cette courbe. En effet la quantité de matière brûlée lors de l'étincelage devrait être proportionnelle au déplacement en l'absence de pertes.

On peut également, pendant des durées déterminées, calculer les rendements énergétiques primaire/secondaire (Eₛ/Eₚ), secondaire/mors (Eₘ/Eₛ), primaire/mors (Eₘ/Eₚ), mors/matière (Eₘₐₜ/Eₘ). L'énergie matière, en étincelage, est l'énergie calorifique nécessaire à l'augmentation de température et à la fusion de la matière. Elle dépend de la nature du produit, de sa géométrie, etc., et peut être calculée. Ceci permet, lors du diagnostic des soudures réalisées et de la soudeuse selon la présente invention, de connaître les pertes énergétiques anormales dans les différents transferts d'énergie depuis le primaire du (ou des) transformateur(s) de soudage jusqu'au voisinage de la soudure. On peut donc diagnostiquer de manière pertinente, par exemple, un passage anormalement résistant du courant secondaire entre les empilages 22,14,13,8,7,21,23 (Fig.1), ou un déséquilibre de débit d'énergie entre deux transformateurs de soudage alimentant un circuit secondaire de soudage (Fig. 9.a).

De plus, cette acquisition de signaux se fait à des vitesses telles qu'elles permettent une analyse détaillée des phénomènes qui accompagnent le processus de soudage en bout et dont l'intervalle de temps caractéristique est situé typiquement entre 0,1 et 1 milliseconde (Figure 4.a) lorsqu'une tension alternative sinusoïdale de fréquence 50 ou 60 Hz alimente le primaire du (ou des) transformateur(s) de soudage.

L'analyse ne se limite pas aux signaux électriques mais intègre également l'analyse du déplacement de la mâchoire mobile, mesurée à plusieurs endroits 41,42 (Fig. 5.a), ainsi que du déplacement différentiel 43 (Fig. 5.a). De plus, les écarts 292,293 (Fig.2) calculés sont affichés en 44,45 (Fig. 5.b). Ces écarts représentent la différence, en deux points déterminés, entre la position de l'axe réel et celle de l'axe théorique. L'axe théorique 291 (Fig. 2) est perpendiculaire à l'axe théorique 9 de la soudeuse tandis que l'axe réel 29 passe par les points d'attache 294,295 (Fig. 2) des capteurs de position sur la mâchoire mobile. Le signal 46 (Fig. 5.b) indique le début du soudage (valeur passant de 0 à 1). Les écarts tels que définis nous informent sur l'obliquité de la mâchoire mobile pendant son déplacement.

Un diagnostic mécanique sera établi sur base des mesures et calculs précédents. Un suivi de dérive des mesures ci-dessus est aussi réalisé. On peut ainsi diagnostiquer des problèmes mécaniques : obliquité de la mâchoire mobile, déhanchement de la mâchoire, contraintes mécaniques, etc. Ces mesures vont servir de base à l'élaboration d'un écran diagnostique d'ordinateur, accessible à l'opérateur après réalisation de chaque soudure. L'écran de contrôle (diagnostic) comporte par exemple des boutons poussoirs accessibles à l'opérateur, directement ou par l'intermédiaire d'une souris. Il peut être par exemple un écran tactile.

Les analyses électriques et mécaniques, par nature complémentaires, apportent au diagnostic un degré de fiabilité appréciable, tandis que les particularités de certaines d'entre elles enrichissent le choix des critères pertinents caractérisant la fiabilité de la soudure. Ainsi, par exemple, une répartition d'énergie d'étincelage déséquilibrée, pouvant être calculée à partir de mesures électriques dans les circuits secondaires du transformateur de soudage (Fig. 4.b), est souvent suivie d'un forgeage déficitaire, ce dernier étant quantifié à partir des mesures fournies par des capteurs de déplacement 26 (Fig. 2) de la mâchoire mobile. Par ailleurs, la quantification des collages pendant la période d'étincelage est obtenue à partir d'une recherche d'un maximum local parmi des mesures instantanées du courant secondaire pendant des durées successives égales à la période cyclique de la tension alimentant le primaire. On comptabilise le nombre de fois que ces maxima de courant dépassent un seuil de pourcentage (par exemple, 75%) du courant maximum de forgeage. Le nombre obtenu permet de qualifier ensuite le défaut à partir de la valeur atteinte. De manière connue en soi, le collage augmente le risque de présence de matière oxydée au sein de la soudure. On remarque dès lors que cette manière de quantifier le défaut ne dépend ni de la géométrie du produit ni des caractéristiques de la tension sinusoïdale alimentant le primaire et constitue un avantage majeur de la présente invention lui conférant dans ce cas un caractère universel. Dans le procédé de soudage par étincelage, comme la phase d'étincelage précède le forgeage, le défaut de collage ne peut donc être révélé que lorsque la soudure est réalisée. L'expression "temps réel" utilisée dans la présente description doit être entendue comme correspondant à une durée ou période comprenant au moins la durée nécessaire à l'élaboration d'une soudure et n'excédant, par exemple, pas plus de cinq secondes ladite durée. Il a été mentionné précédemment que le résultat d'un diagnostic sera connu après l'exécution de la soudure et présenté immédiatement sous forme conviviale à l'opérateur avant que la soudure ne quitte la station de soudage en bout. Par exemple, dans le cas d'un défaut de collage, le texte affiché en 79 ou 80 (Fig. 7) est "Collage important avant forgeage", le texte affiché en 68 (Fig. 7) est "Soudure à vérifier" et la case 74 passe à la couleur rouge.

Le contrôle des positions initiale, intermédiaires et finale de la mâchoire mobile, des longueurs forgées, des pressions hydrauliques est réalisé de manière absolue. Le contrôle des positions intermédiaires et des longueurs forgées est influencé par une erreur d'encodage ou par un envoi automatique erroné des données de base des produits à souder : épaisseur, largeur, section à souder et soudabilité de chaque produit. Cependant l'opérateur peut tester immédiatement après soudage un diagnostic à partir de données éventuellement plus pertinentes et bénéficier immédiatement du résultat sans recommencer la soudure.

La figure 6 donne un exemple d'écran diagnostique affichable avant et après réalisation d'une soudure. Le diagnostic peut donc être testé en changeant les données de base (soudabilité 62, épaisseur 63, largeur 64 et section à souder 65) sans pour autant recommencer la soudure. A partir du bouton 49, l'opérateur peut modifier lesdites données de base à chaque nouvelle séquence 51, pour la tête de bande (52) et la queue de bande (53). Il peut ensuite retourner à l'écran de la figure 7 ou 8, appelé "écran process", en appuyant sur le bouton 50. Le diagnostic est affiché en 78,74 (Fig. 7 ou 8) pour les nouvelles données de base introduites et leurs paramètres, sous forme d'un libellé texte (78) et d'un voyant (74) qui peut être vert (Ok) ou rouge (NOk).

L'écran de la figure 6 permet aussi à l'opérateur de modifier avant soudage les valeurs proposées automatiquement 47 ("10", "26", "19", etc.) dans la partie intermédiaire, dite de sélection des paramètres 48, au moyen des doubles touches à flèches 99 (↑ et ↓). Dans ce cas, le diagnostic se fera à partir de ces paramètres modifiés et non plus à partir des valeurs des paramètres de soudage 54,55,56,57,58,59,60,61 proposées à la première ligne 47 ("10", "26", "19", etc.). Dans la forme d'exécution préférée de l'invention considérée ici, les paramètres de soudage, bien connus de l'homme de l'art, sont respectivement le pourcentage haute tension 54, le temps de soudage 55, la course de forgeage 56, le plot 57 (sélection de la valeur de tension secondaire), la came 58 (convexité de la courbe de déplacement), l'espace final 59, la barre d'espacement 60 et le nombre de cycles 61.

Les analyses des collages (et microcollages) et de la répartition de l'énergie d'étincelage déséquilibrée sont réalisées de manière relative, en évitant ainsi d'être influencé par une erreur d'encodage ou par un envoi automatique erroné des données de base des produits à souder (épaisseur, largeur, section à souder et soudabilité de chaque produit).

L'analyse de la soudure est réalisée directement à la fin de celle-ci et les résultats issus de cette analyse sont disponibles et présentés immédiatement sous forme conviviale à l'opérateur avant que la soudure ne quitte la station de soudage en bout (Fig.7 ou 8).

Lorsque les données de base 62,63,64,65 ont été introduites, manuellement ou automatiquement, des valeurs des paramètres de soudages 54,55,56,57,58,59,60,61 sont générés et visualisables (Fig.6). Dans l'exemple considéré ici, après réalisation de la soudure, l'écran diagnostique "process" (Figure 7 ou figure 8) est présenté, sur demande ou automatiquement. Cet écran est essentiellement subdivisé en trois parties. La partie inférieure reprend, comme à la figure 6, les caractéristiques de la séquence numérotée 51, avec les données de base 62,63,64,65. Dans cette partie, on trouve également le nombre total de soudures réalisées 66, le statut de la dernière soudure 68 ("soudure à vérifier" ou "soudure douteuse" ou "soudure Ok"), le numéro de la dernière soudure enregistrée 67 et le libellé du fichier de stockage des données 69. Dans la zone intermédiaire de l'écran, on trouve également, comme dans la figure 6, les valeurs des paramètres du procédé 54,55,56,57,58,59,60,61 (Fig. 7 ou 8) pour la "Proposition Charte" 47 et la "Sélection" 48. On a en plus les paramètres effectivement mesurés ("Mesures" 75). Cet écran permet en outre un certain nombre d'interventions de l'opérateur, si nécessaire, par boutons poussoirs : "Entrer données soudure suivante si nécessaire - Cliquer ici" 70, "Validation après soudage - Attente soudure suivante" 71, "Zoom forgeage" 72. Dans la partie supérieure de l'écran, on retrouve les graphiques d'enveloppe de tension et courant respectivement, du secondaire en fonction du temps 76,77, éventuellement avec mention du nombre de cycles de collage au début du procédé et avant forgeage (non représenté), ainsi que les caractéristiques de déplacement mâchoire 81,82. La cause de l'insuffisance de la soudure éventuelle, dans ce cas-ci ou dans d'autres cas, est également mentionnée sous forme d'un commentaire 78 (Exemple : "Collage important avant forgeage > 0,12 sec. : augmenter Temps Soudage +6").

Cette façon de procéder permet à l'opérateur de recommencer la soudure si cela s'avère nécessaire et d'éviter ainsi une rupture dans le procédé de traitement qui suit le soudage en bout (Fig. 7).

L'écran diagnostique de la figure 8 est identique à celui de la figure 7 (collages), mais pour une soudure qualitativement bonne. Le statut 68 est "Soudure Ok". Il n'y a plus de mention en 78.

Le diagnostic se base notamment sur l'analyse des signaux de capteurs qui ne sont pas utilisés pour la régulation de la machine de soudage. Le diagnostic n'en est donc que plus pertinent.

L'analyse des signaux ne s'arrête pas à un diagnostic de la soudure ; elle permet également de diagnostiquer l'état électromécanique de l'outil. Pour mémoire, on se référera au graphique de la figure 5.a représentant le déplacement au cours du temps de la mâchoire mobile en deux endroits différents 41,42 ainsi que le déplacement différentiel 43. On se référera également au graphique de la figure 5.b qui rend compte de l'obliquité de la mâchoire mobile en fonction de sa position à chaque déplacement de celle-ci. En outre, l'opérateur peut avoir à sa disposition un écran reprenant les différents réglages dans le temps par les mécaniciens lors des changements de mâchoire, ainsi que les ajustements de pression des accumulateurs hydrauliques. Ces valeurs peuvent être accompagnées de commentaires (Voir exemple dans le tableau 1). C'est le choix des endroits où les mesures sont prises et les différentes valorisations de celles-ci (Figures 1, 2 et 3) qui permettent de prolonger le traitement des données et d'aboutir à un diagnostic sur les différents constituants de l'outil : le (ou les) transformateur(s), les empilages, les mâchoires et les mécanismes de déplacement. Un calcul et un bilan énergétique précis et réels sont également réalisés : énergie au primaire et secondaire du (ou des) transformateur(s), énergie fournie vers les mors, etc.

Une aide à la conduite du soudage est également apportée par l'élaboration de propositions des paramètres de soudage, dont voici une liste non exhaustive :
- temps de soudage si ce choix est existant ;
- valeur du courant ou des énergies primaires et/ou secondaires si ces choix sont existants ;
- course de forgeage ;
- valeur des dépassants ;
- choix de la tension du secondaire si ce choix est existant ;
- choix de la courbe de déplacement et sa convexité si ce choix est existant ;
- temps de haute tension par rapport à la basse tension pendant l'étincelage si ce choix est existant ;
- nombre de cycles de tension pendant lequel on maintient la tension après le début de forgeage ;
- les angles d'amorçage des thyristors commandés dans les différentes phases de soudage ;
- la course d'étincelage si existante, etc.

Un fichier résumant l'analyse de la soudure est aussi élaboré par le système diagnostique et archivé après chaque soudure (Voir exemple au tableau 3). Un archivage des données de chaque soudure est aussi réalisé et permet la reconstitution des "écrans diagnostiques" qui ont été mis antérieurement à la disposition des soudeurs et cela sur un équipement informatique de type "station de développement". Cet archivage nous permet en plus de faire une étude approfondie de chaque soudure et donc de progresser dans la pertinence des diagnostics posés. Sur ladite station de développement, on fait des statistiques sur un grand nombre de soudures réalisées et on élabore de nouvelles règles relatives aux opérations de soudage en bout, plus particulièrement pour les aciers réputés difficiles à souder. En outre, un écran récapitulatif est mis à disposition pour visualiser ces statistiques avec différents types de diagrammes tels que, par exemple, diagramme à secteurs "camembert" (Fig. 10.a), histogramme (Fig. 10.b), de type Pareto, etc. Le détail des défauts de soudage peut également figurer sur le même écran (Voir exemple au tableau 2).

Lors des entretiens et des réglages mécaniques, le procédé suivant cette invention est d'une grande utilité car il permet de les archiver et de les utiliser pour calibrer notamment les capteurs de position nécessaires au diagnostic. On pourra donc analyser l'influence des différents paramètres de réglage sur la qualité de la soudure réalisée. Un suivi des pièces d'usure telles que les mâchoires, etc., et des interventions mécaniques est aussi réalisé (Tableau 1). Ainsi, l'écran représenté par le tableau 1 fait notamment partie des "écrans diagnostiques" accessibles à l'opérateur de soudeuse.

Enfin le dispositif permet de mémoriser toutes les interventions réalisées sur la machine et d'en tenir compte pour effectuer une analyse des dérives entre deux entretiens (Tableau 1).

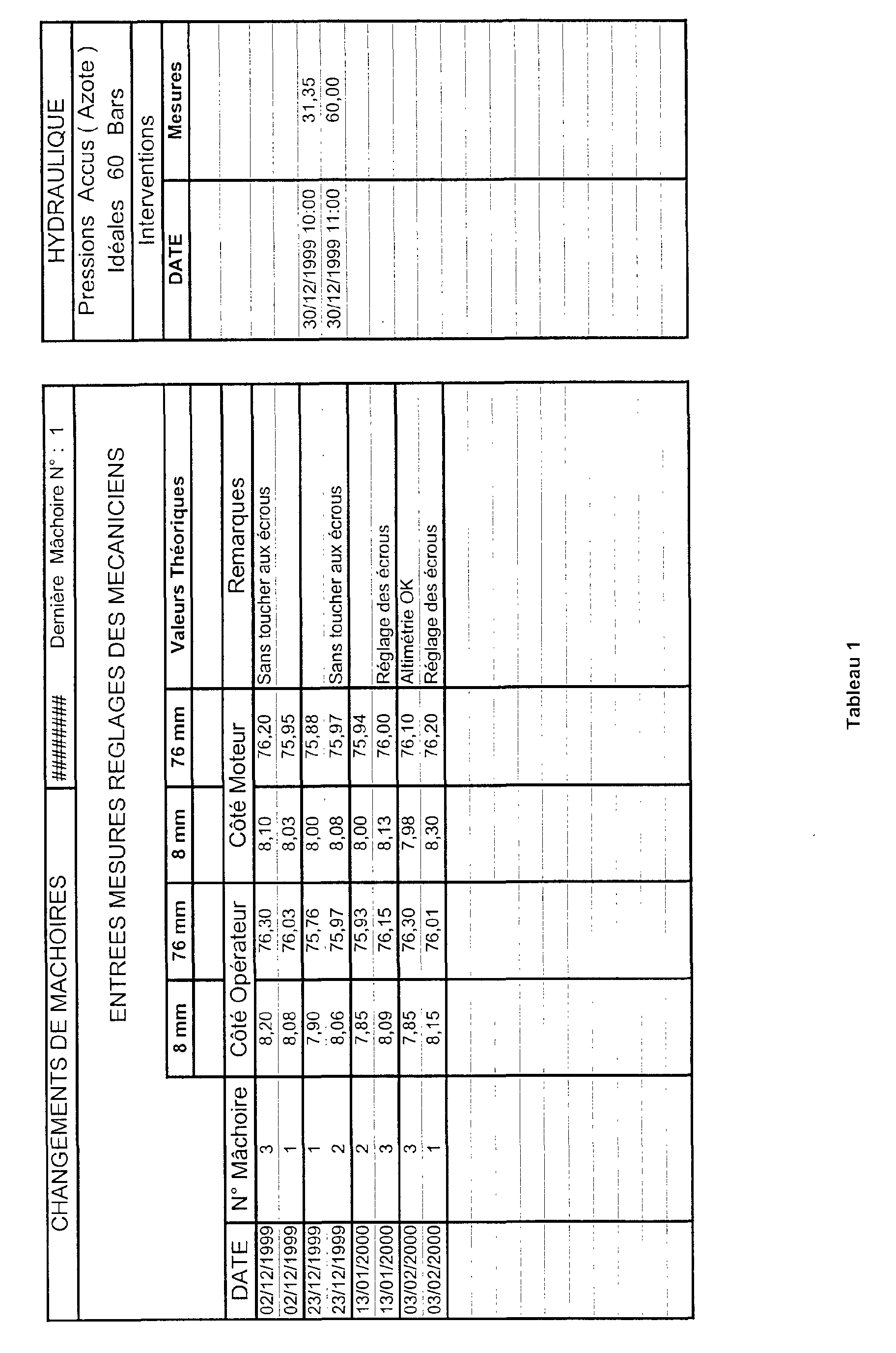

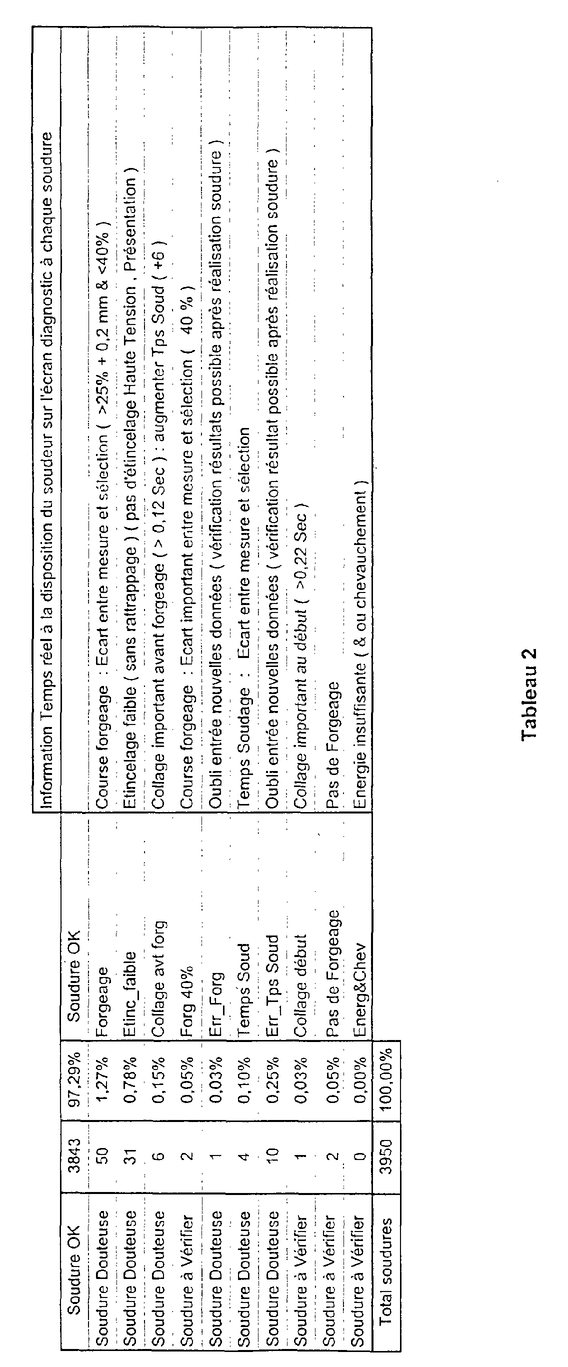

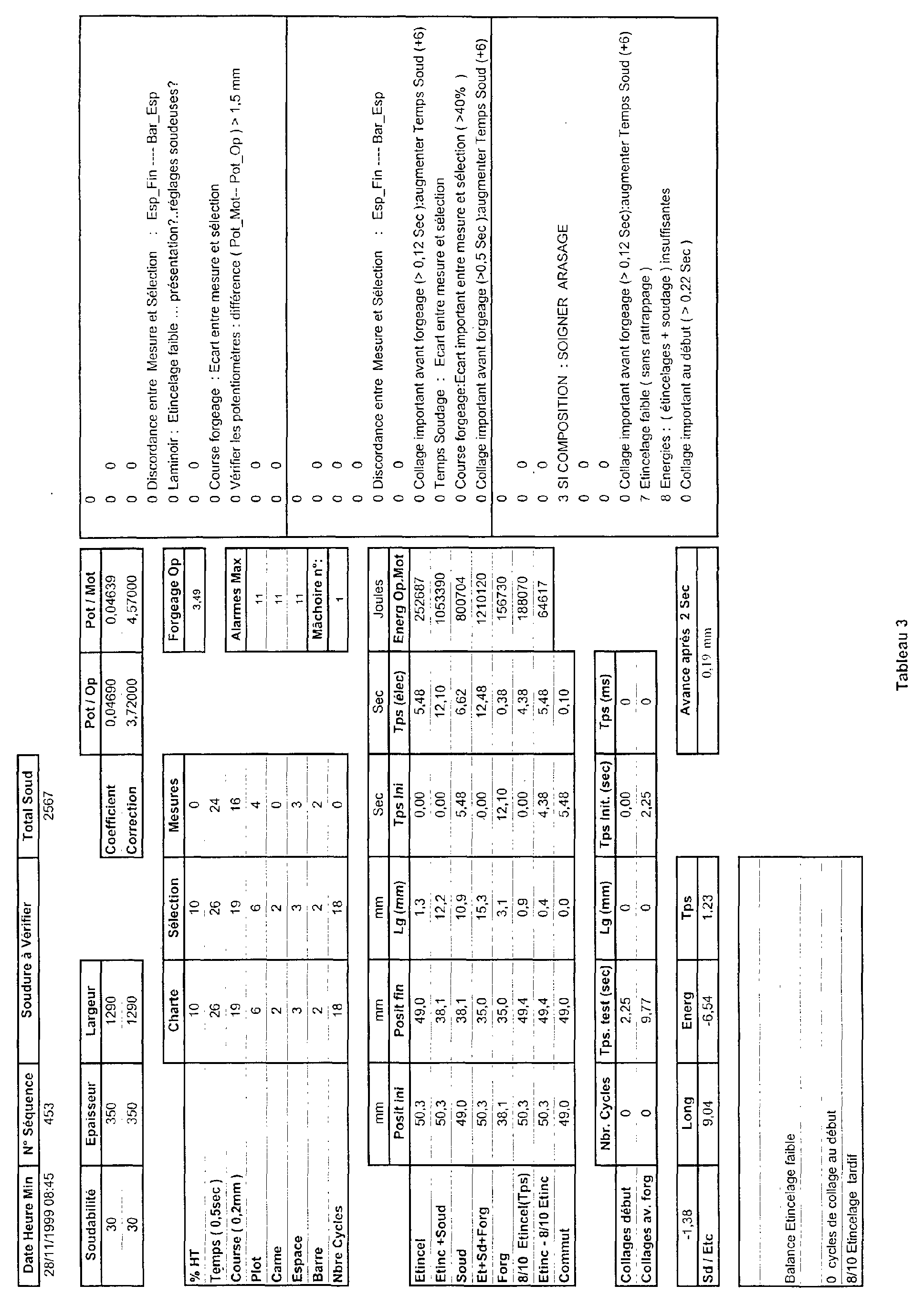

## Revendications

1. Procédé d'acquisition de données, sous forme de mesures et de calculs, de diagnostic dynamique et d'aide à la décision en "temps réel" pour une soudeuse électrique en bout par étincelage direct et pour les soudures obtenues au moyen de ladite soudeuse ; ladite soudeuse étant incorporée dans un processus de production d'acier, de préférence continu, et comprenant au moins un transformateur comportant au moins un circuit primaire et au moins un circuit secondaire, ainsi qu'un dispositif de serrage à mâchoires (3,4), dont une mâchoire fixe (3) et une mâchoire mobile (4), permettant de maintenir au moins deux pièces à souder (1,2) et insérées en série dans le circuit secondaire du transformateur (10), ledit circuit secondaire comportant en outre au moins un bobinage secondaire (12) dudit transformateur (10), des connexions d'entrée et sortie du bobinage secondaire (A,B), des empilages (22,14,13,8,7,21,23), lesdites mâchoires (3,4) et des mors (5,6), les circuits primaire et secondaire étant munis de capteurs de courant et de tension ; comprenant les étapes suivantes :
- mesure de la tension alternative instantanée (19,33), de préférence sinusoïdale, aux bornes du primaire du transformateur de la soudeuse ;
- mesure de la tension alternative instantanée aux bornes du secondaire (16,35,36) du transformateur, et entre les mors (18,39) des mâchoires de la soudeuse ;
- mesure du courant instantané dans le primaire (24,34) et le secondaire (17,37,38) du transformateur ;
- mesure du déplacement instantané (41,42) de la mâchoire mobile (4) en au moins deux points (294,295) ;
- mémorisation desdites tensions, desdits courants et dudit déplacement pendant le processus de soudage ;
- calcul de l'énergie fournie par le primaire en fonction du temps ;
- calcul de l'énergie fournie par le secondaire, de préférence vers les mors, en fonction du temps ;
- calcul de l'énergie fournie par le secondaire vers les mors en fonction du déplacement de la mâchoire mobile ;
- calcul de l'énergie calorifique dissipée lors de l'étincelage, appelée énergie matière, en fonction du déplacement de la mâchoire mobile ;
- calcul du rendement énergétique secondaire/primaire, mors/secondaire, mors/primaire et mors/matière, pendant au moins une durée donnée ;
- sur base desdites mesures et desdits calculs, établissement automatique d'un diagnostic dynamique et en "temps réel" (68,74,78,79,80), avec ou sans intervention interactive d'un opérateur, quant à la qualité d'au moins une soudure venant d'être réalisée sur ladite soudeuse.

2. Procédé selon la revendication 1, **caractérisé en ce qu'**il comporte en outre les étapes suivantes :
- calcul de l'énergie fournie par le primaire, pendant au moins une durée donnée ;
- calcul de l'énergie fournie par le secondaire, pendant au moins une durée donnée ;
- calcul de l'énergie fournie par le secondaire vers les mors, pendant au moins une durée donnée.

3. Procédé selon la revendication 1 ou 2, la mâchoire mobile (4) de ladite soudeuse étant actionnée en direction de la mâchoire fixe (3) au moyen de vérins hydrauliques (281), actionnés à leur tour par un circuit hydraulique de commande (27), un capteur de pression différentielle (28) étant installé sur les vérins (281), un capteur de pression (274) étant installé à la sortie d'accumulateurs hydrauliques (271), deux capteurs linéaires (26) étant installés dans l'intervalle entre les mors (5,6), de préférence inférieurs ; comportant en outre les étapes suivantes :
- mesure instantanée du déplacement (41,42) de la mâchoire mobile (4) en au moins deux points et calcul du déplacement différentiel (43) ;
- mesure instantanée de la pression (274) à la sortie des accumulateurs hydrauliques (271) ;
- mesure instantanée de la pression différentielle (28) appliquée aux vérins de déplacement (281) ;
- mémorisation dudit déplacement et desdites pressions pendant le processus de soudage ;
- en fonction dudit déplacement, calcul de l'écart (44,45), dit obliquité, de la mâchoire mobile (4) en au moins deux points (294,295), par rapport à un axe théorique (291) perpendiculaire à l'axe théorique de soudage (9) ;
- calcul des efforts mécaniques de soudage pendant les phases d'étincelage et de forgeage.

4. Procédé d'acquisition de données sous forme de mesures et/ou calculs, selon l'une quelconque des revendications 1 à 3, **caractérisé en ce que** lesdites données sont affichées sur un écran d'ordinateur, un moniteur de contrôle ou une station de traitement, de préférence en couleurs, et valorisées sous forme d'un diagnostic automatique (68,74,78,79,80).

5. Procédé selon la revendication 4, **caractérisé en ce que** l'affichage desdites données et leur valorisation sous forme de diagnostic (68,74,78,79,80) permet à un opérateur de les visualiser et/ou analyser en "temps réel" et constitue pour ledit opérateur une aide à la décision en vue de valider ou rejeter la soudure qui vient d'être réalisée.

6. Procédé selon la revendication 4 ou 5, **caractérisé en ce que**, immédiatement après l'opération de soudage, un nouveau diagnostic est établi, sur base de données plus pertinentes, de préférence introduites par ledit opérateur et de préférence liées à la géométrie (63,64,65) et la soudabilité (62), dont le résultat est obtenu immédiatement, sans recommencer la soudure.

7. Procédé selon l'une quelconque des revendications précédentes, **caractérisé en ce qu'**une courbe d'énergie dissipée en fonction du déplacement (94) est obtenue de préférence à un endroit se trouvant aussi près que possible de la soudure, ladite courbe étant utilisée immédiatement après soudure et/ou ultérieurement pour des analyses numériques conduisant à des diagnostics de type énergétique.

8. Procédé selon la revendication 6 ou 7, **caractérisé en ce que** l'opérateur évalue la qualité du forgeage ainsi que le nombre de défauts de soudage, de préférence des collages et micro-collages.

9. Procédé selon la revendication 6, **caractérisé en ce que** la soudure peut être rejetée qualitativement et recommencée par l'opérateur, sans que les pièces à souder aient quitté la station de soudage pour poursuivre le procédé de production.

10. Procédé selon la revendication 4, **caractérisé en ce que** l'affichage des données permet à l'opérateur de les analyser en "temps réel" et d'émettre un diagnostic sur l'état électromécanique de la soudeuse.

11. Procédé selon la revendication 5, **caractérisé en ce qu'**une décision de validation ou de rejet de la soudure qui vient d'être réalisée est prise automatiquement en "temps réel", sans intervention de l'opérateur.

12. Procédé de détection, de quantification et de qualification de défauts de collage avant forgeage, selon l'une quelconque des revendications précédentes, **caractérisé en ce qu'**il comprend les étapes suivantes :
- recherche de maxima locaux dans la courbe (77) constituée par les mesures de courant secondaire instantané prises pendant des durées successives correspondant à la période cyclique de la tension alimentant le primaire du transformateur ;
- comptage, pendant l'étincelage, du nombre de fois que lesdits maxima de courant dépassent un pourcentage fixe du courant maximum de forgeage ;
- à partir de la valeur obtenue, qualification dudit défaut.

13. Procédé selon l'une quelconque des revendications précédentes, **caractérisé en ce qu'**un fichier desdites données est élaboré et archivé pour chaque soudure réalisée.

14. Procédé selon l'une quelconque des revendications précédentes, **caractérisé en ce que** des statistiques de qualité sont établies sur un grand nombre de soudures réalisées, lesdites statistiques étant affichées et répertoriant la nature et le nombre des défauts de soudage.

15. Procédé selon l'une quelconque des revendications précédentes, **caractérisé en ce qu'**une acquisition de signaux est réalisée à une cadence telle que, lorsqu'une tension alternative sinusoïdale de fréquence 50 ou 60 hertz alimente le primaire du transformateur, l'intervalle de temps d'acquisition caractéristique est compris entre 0,01 et 2 ms, et de préférence entre 0,1 et 1 ms.

16. Procédé selon l'une quelconque des revendications précédentes, **caractérisé en ce que** les interventions de maintenance réalisées sur la soudeuse sont mémorisées.

17. Procédé selon l'une quelconque des revendications précédentes, **caractérisé en ce que** le soudage par étincelage direct s'applique à un processus de production d'acier continu ou discontinu.

18. Procédé selon l'une quelconque des revendications précédentes, **caractérisé en ce que** le soudage par étincelage direct est effectué en courant alternatif, pulsé, quasi continu ou continu.

19. Procédé selon l'une quelconque des revendications précédentes, **caractérisé en ce que** le soudage par étincelage direct s'applique à des produits à section ronde, carrée, rectangulaire, à des bandes plates ou à des produits tubulaires.

20. Dispositif d'affichage de données électroniques, de préférence un écran d'ordinateur, un moniteur de contrôle ou une station de développement, lesdites données étant obtenues au moyen du procédé selon l'une quelconque des revendications précédentes, ou par introduction par un opérateur, de préférence à un clavier, **caractérisé en ce que** le dispositif comporte au moins une zone d'affichage d'un graphique (X,Y), une zone où figurent les données de base des produits à souder (62,63,64,65) pour une nouvelle séquence de soudage (51,52,53), après introduction automatique ou par ledit opérateur desdites données, et une zone de diagnostic, comportant des valeurs de paramètres de soudage (54,55,56,57,58,59,60,61) prédéterminés (47), les mêmes paramètres sélectionnés si nécessaire par l'opérateur (48) et les mêmes paramètres effectivement mesurés (75).

21. Dispositif selon la revendication 20, **caractérisé en ce que** les données de base des produits à souder sont, pour la tête (52) et la queue de bande (53), la soudabilité (62), l'épaisseur (63), la largeur (64) et la section à souder (65) de tôle.

22. Dispositif selon la revendication 21, **caractérisé en ce que** les paramètres de soudage prédéterminés sont sélectionnés dans le groupe comprenant le pourcentage haute tension (54), le temps de soudage (55), la course de forgeage (56), le plot du transformateur (57), la came (58), l'espace final (59), la barre d'espacement (60) et le nombre de cycles (61).

23. Dispositif selon l'une quelconque des revendications 20 à 22, **caractérisé en ce qu'**il comporte une zone d'affichage indiquant le statut qualitatif de la soudure (68,74).

24. Dispositif selon la revendication 23, **caractérisé en ce que**, au cas où la qualité de la soudure est insuffisante, le dispositif est pourvu d'une zone d'affichage (78,79,80) indiquant la cause de cette insuffisance.

25. Dispositif selon l'une quelconque des revendications 20 à 24, **caractérisé en ce que** le ou les graphiques (X,Y) comportent des valeurs en ordonnée instantanées, absolues ou différentielles, mesurées ou calculées, choisies dans le groupe constitués par des tensions, des courants, des énergies dissipées, des rendements énergétiques relatifs au soudage et des déplacements de mâchoires, les valeurs mesurées étant acquises en différents points de la soudeuse.

26. Dispositif selon l'une quelconque des revendications 20 à 25, **caractérisé en ce que** des statistiques portant sur un grand nombre de soudures déjà réalisées sont affichées dans des diagrammes.

27. Dispositif selon la revendication 26, **caractérisé en ce que** lesdits diagrammes sont du type à secteurs, histogramme ou Pareto.

28. Soudeuse électrique en bout par étincelage direct, sur laquelle est mis en oeuvre le procédé selon l'une quelconque des revendications 1 à 19.

29. Soudeuse électrique en bout par étincelage direct, comprenant un dispositif d'affichage de données électroniques selon l'une quelconque des revendications 20 à 27.

30. Utilisation d'une soudeuse selon la revendication 28 ou 29, pour le soudage en bout par étincelage direct de bande d'acier dans un processus continu, de préférence le décapage ou le laminage continu.
